# EUROPEAN PATENT APPLICATION

(11) **EP 4 749 414 A1**
(43) Date of publication of application: **27.05.2026**
(21) Application number: 25214727.7
(22) Date of filing: 10.11.2025
(51) Int. Cl.: G06F 3/042, E03C 1/05, G03H 1/00

(54) **HOLOGRAPHIC USER INTERFACE**

(30) Priority: 25.11.2024 US 202463724687 P; 07.11.2025 US 202519382811
(71) Applicant: Kohler Mira Limited, Gloucester, Gloucestershire GL52 5EP (GB)
(72) Inventor: BLENKARN, Daniel, Cheltenham, GL52 5EP (GB); LEA, Benjamin, Cheltenham, GL52 5EP (GB); EDWARDS, Norman, Cheltenham, GL52 5EP (GB)
(74) Representative: Barker Brettell LLP

(57) **Abstract**

The system provided herein may include an ablutionary fitting (e.g., sink, faucet, toilet) and a holographic user interface module. The module may be used to control operation of the ablutionary fitting. The module may include a printed circuit board assembly (PCBA), a display screen (e.g., a liquid crystal display (LCD), projection, dot matrix, light-emitting diode (LED), etc.) coupled to the PCBA, a holographic 3D plate, and an infrared touch bar. When light emits from the display screen, the light may be directed toward the holographic 3D plate, and the holographic 3D plate may transform the light into a screen image. The infrared touch bar may analyze activation of the screen image by a user and control the ablutionary fitting based on the activation of the screen image.

## Description

### Cross-Reference to Related Applications

The present application claims priority to U.S. Provisional Patent Application No. 63/724,687, filed November 25, 2024, entitled, "HOLOGRAPHIC USER INTERFACE," and U.S. Patent Application No. 19/382,811, filed November 7, 2025, the entire contents of which are hereby incorporated by reference.

### Background

Consumers may prefer using user interfaces to control or operate bathing and/or kitchen products. These user interfaces may be used to customize water temperature, pressure, flow rate, etc. User interfaces may include touchscreens for a user to access in order to control or operate the associated products.

### Brief Description of Drawings

Fig. 1 is a perspective view of an example holographic user interface module.
Fig. 2 is cross-sectional view of an example holographic user interface module.
Fig. 3 is cross-sectional view of an example holographic user interface module.
Figs. 4-24 are perspective views of an example holographic user interface module.
Fig. 25-40 are illustrative depictions of an example screen image.
Fig. 41 is a perspective view of an example holographic user interface module.
Fig. 42-44 are illustrative depictions of an example screen image.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

### Detailed Description

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

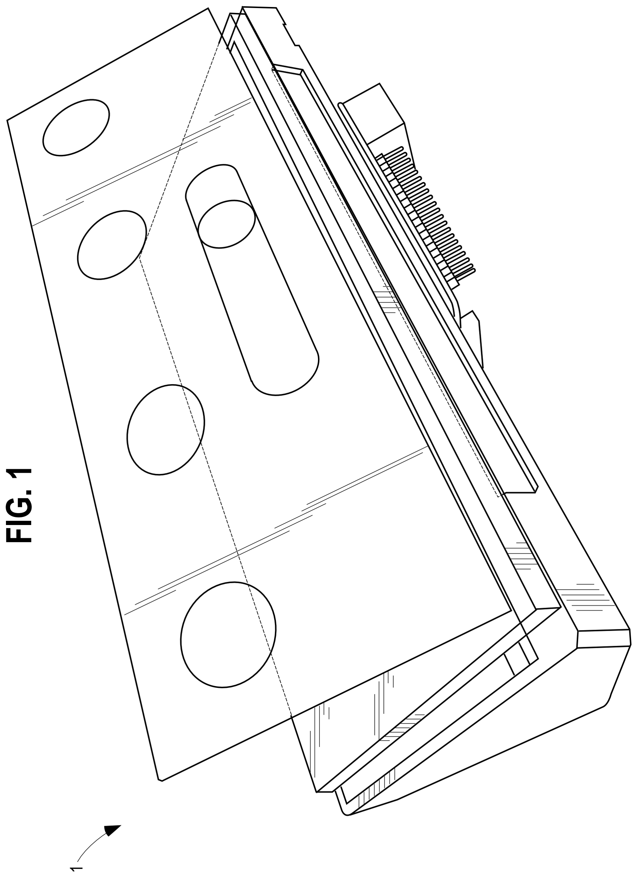

Turning first to Fig. 1, a holographic user interface module 1 may be adapted and configured for multiple product and ablutionary fitting uses (e.g., faucet, sink, toilet). The module 1 may aid in increasing hygiene and safety when operating and using various products, as the module 1 may operate the products without requiring a user to physically touch a screen or other components to operate them. The module 1 may reduce physical touchpoints to aid in the reduction of the spread of bacteria. The module 1 may be used in connection with various products, including, but not limited to, sinks, faucets, toilets, etc. Despite the placement or configuration of the module 1, the module 1 may be used to control the operation of the associated product.

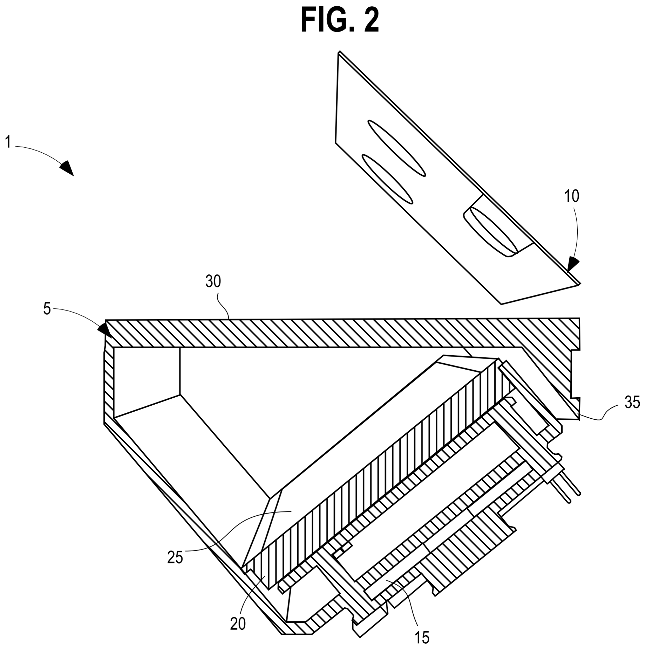

Turning to Fig. 2, the module 1 may include a housing 5 that may house various components that develop a screen image 10, which may be holographic in nature such that it appears to be "floating." The module 1 may be coupled to software in order to control the operation and/or design of the screen image 10. The housing 5 may include a printed circuit board assembly (PCBA) 15 coupled to a display screen 20. The display screen 20 may be any suitable or desired display screen, including, but not limited to, a liquid crystal display (LCD), projection, dot matrix, light-emitting diode (LED), etc. The display screen 20 may be covered and/or protected by a privacy filter 25. Light may emit from the display screen 20 and may be directed toward a holographic 3D plate 30. The display screen 20 may be positioned at a specified distance and angle relative to the holographic 3D plate 30.

The holographic 3D plate 30 may create the screen image 10 from the light from the display screen 20. The screen image 10 may include various functionalities and may include various designs for aesthetic and non-aesthetic purposes. The screen image 10 may be positioned the same distance and angle relative to the holographic 3D plate 30 as the display screen 20, such that it is substantially mirrored. The module 1 may include an infrared touch bar 35, which may create an interactive plane. The interactive plane of the infrared touch bar 35 may align with the screen image 10. Such alignment may allow a user to "touch" the screen image 10 despite no actual physical screen, causing the module 1 to recognize the option selected. The infrared touch bar 35 may be used to analyze activation of the screen image by a user and control the product based on the activation of the screen image.

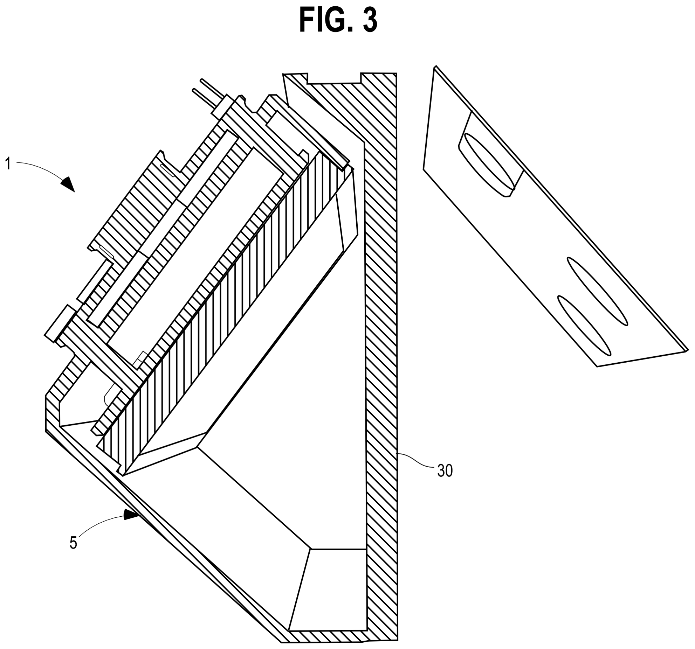

The module 1 may be positioned in the manner as illustrated in Fig. 2 such that the holographic 3D plate 30 is horizontal. Turning to Fig. 3, the module 1 may be positioned in the manner as illustrated such that the holographic 3D plate 30 is vertical. Different orientations may be achieved and utilized as desired for a particular application. The vertical orientation as illustrated in Fig. 3 may be useful in scenarios where water is involved in order to aid in preventing water from interacting with or being received in the housing 5.

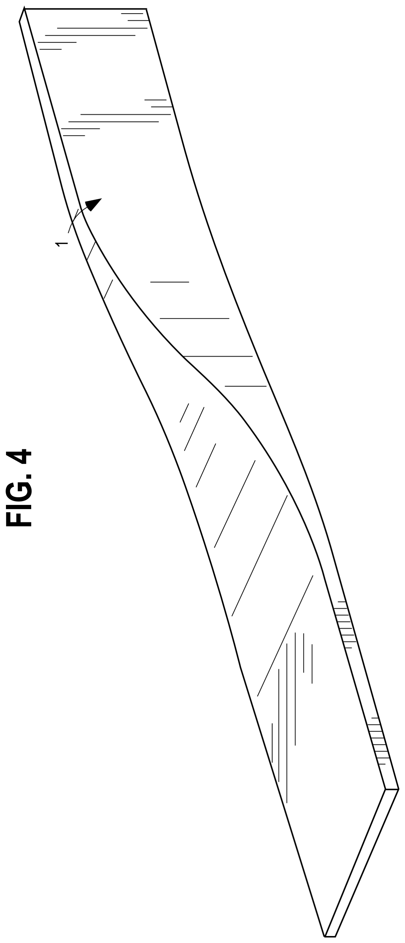

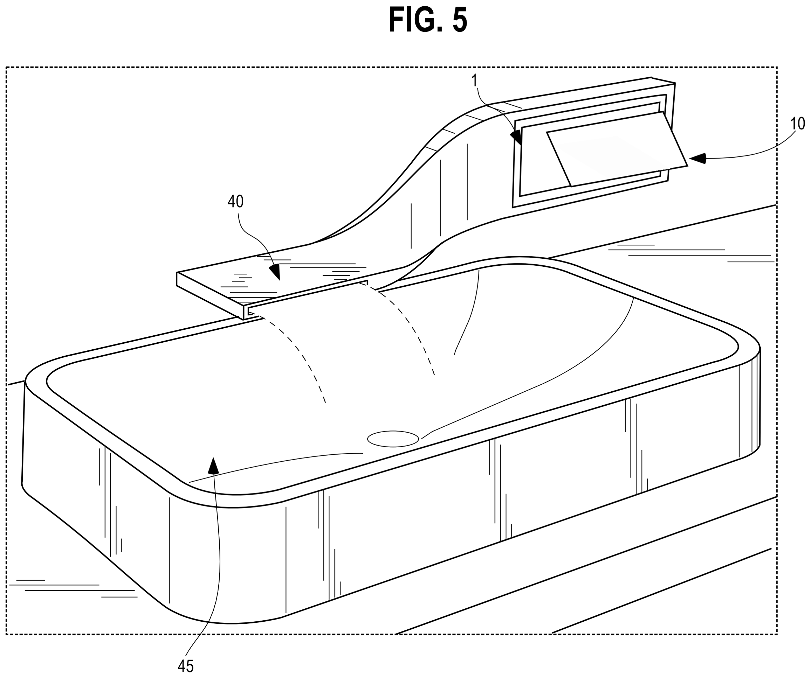

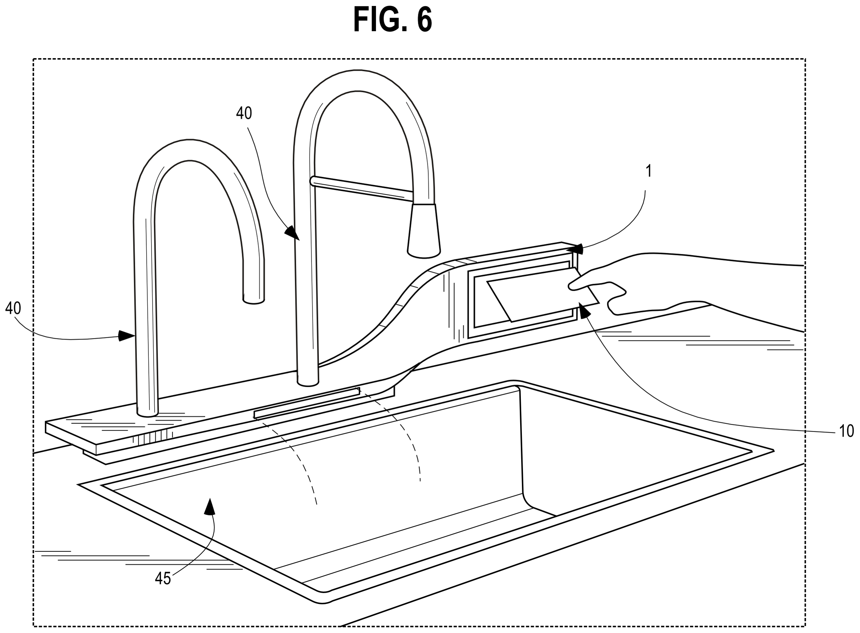

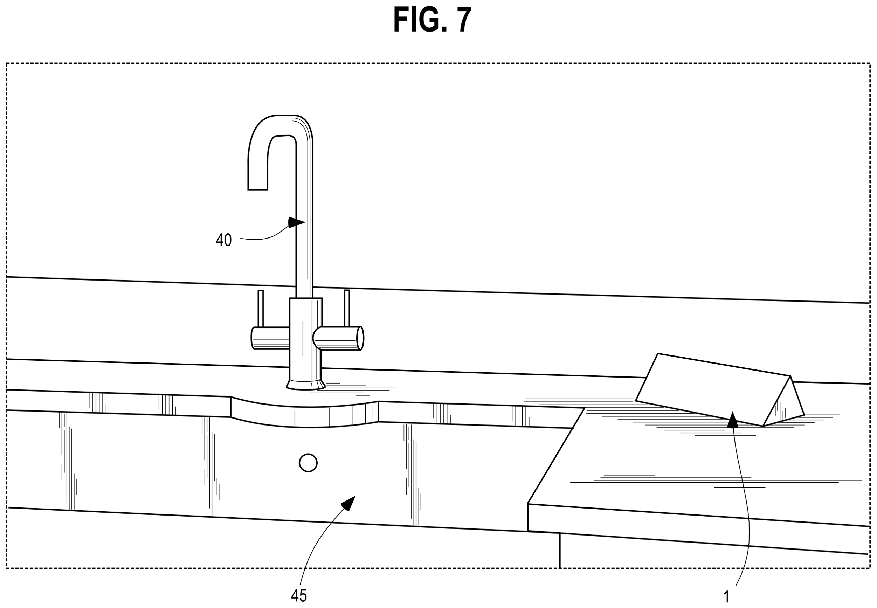

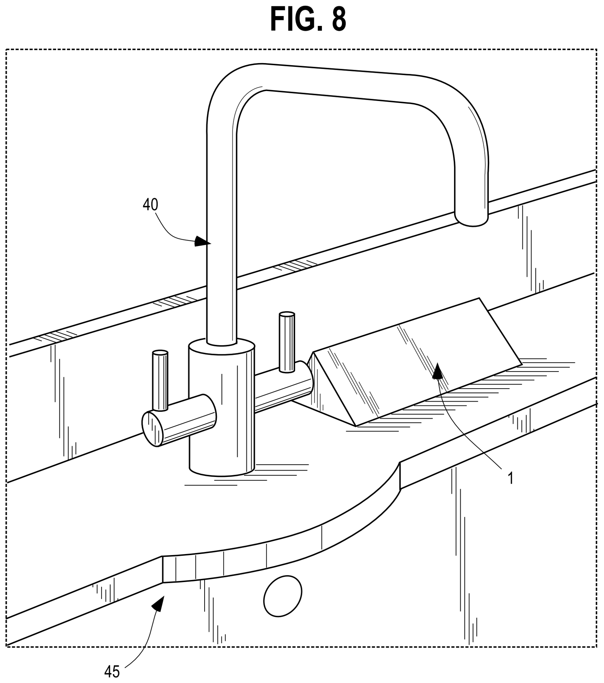

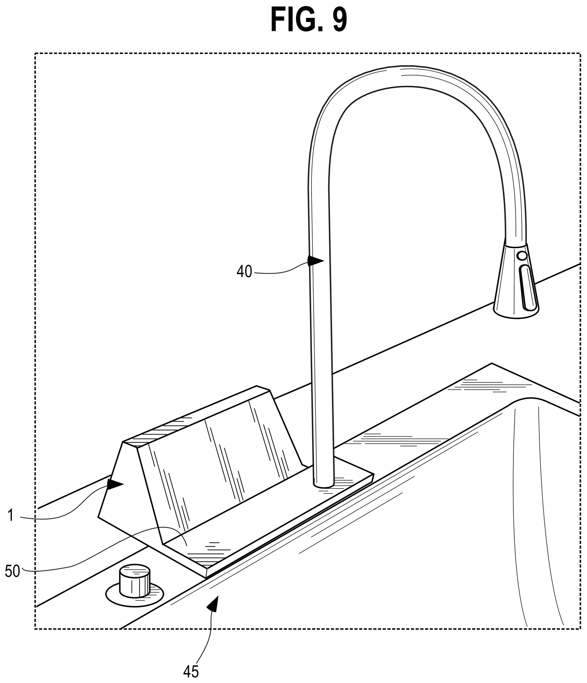

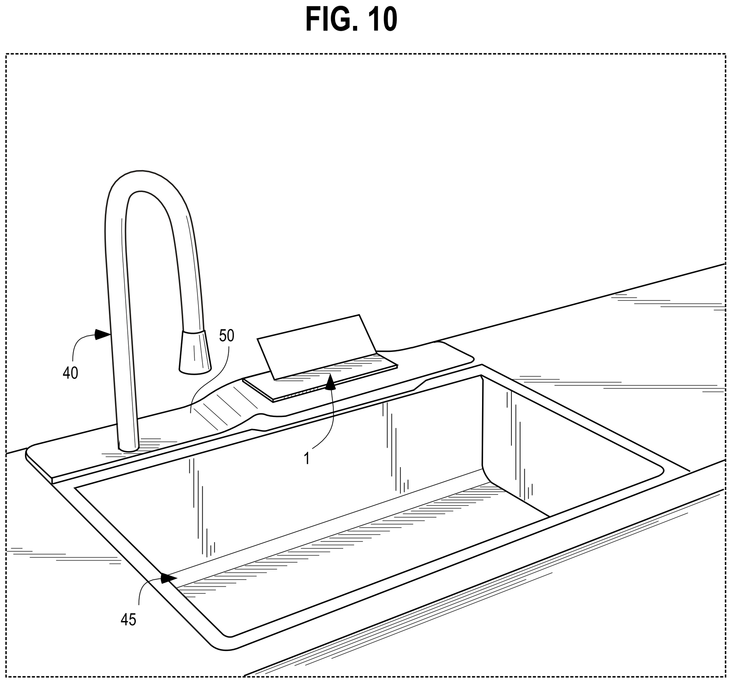

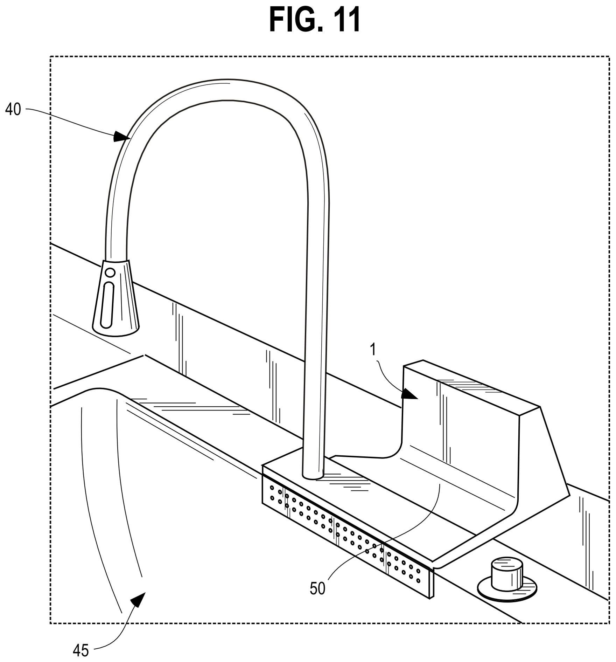

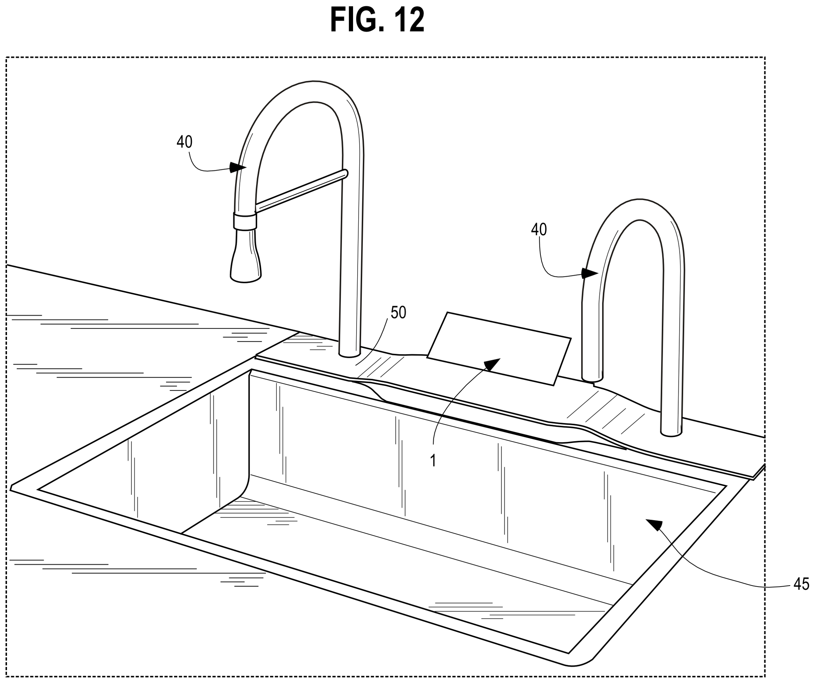

Turning to Fig. 4, the module 1 may be designed in a sculpted form, and as illustrated in Figs. 5 and 6, the module 1, in sculpted form, may be attached to or integrated with a faucet 40. The faucet 40 may feed into a sink 45, and a user may use the screen image 10 of the module 1 to control the faucet 40. This may be particularly useful when a user's hands are dirty, as the user does not have to physically touch any components (thereby potentially making such components dirty) while still being able to operate and use the faucet. As another example, this may be particularly useful when a user's hands are wet, as the user does not have to physically touch any components (thereby potentially making such components wet) while still being able to turn the faucet on and off. Turning to Figs. 7 and 8, the module 1 may be placed next to, behind, or near a sink 45 and faucet 40. As illustrated in Fig. 9-12, the module 1 may be integrated into a faucet plate 50 connected to or integrated with a faucet 40 near a sink 45. The module 1 may be positioned in a horizontal configuration, and the screen image 10 may be at any angle (e.g., substantially 45°-50° from the holographic 3D plate 30).

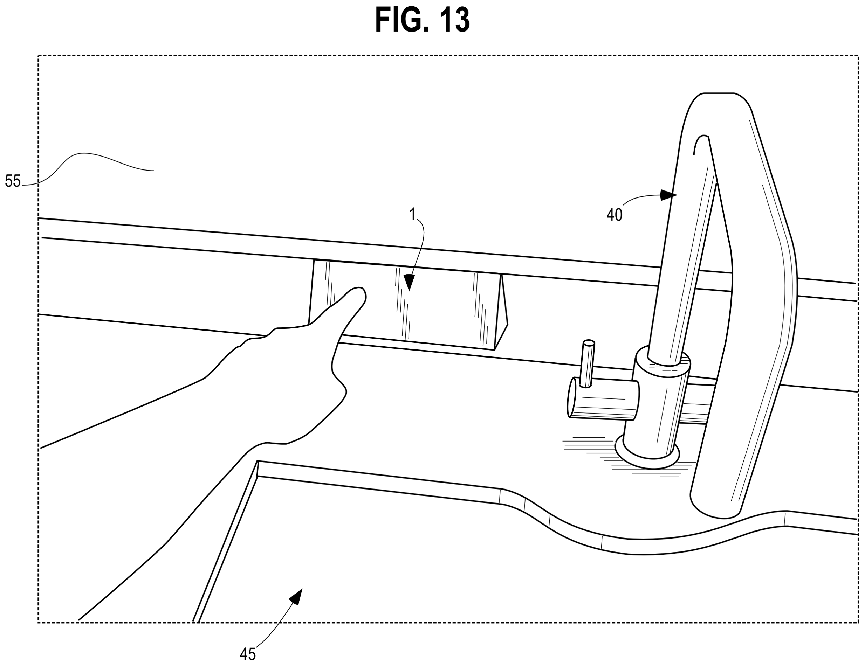

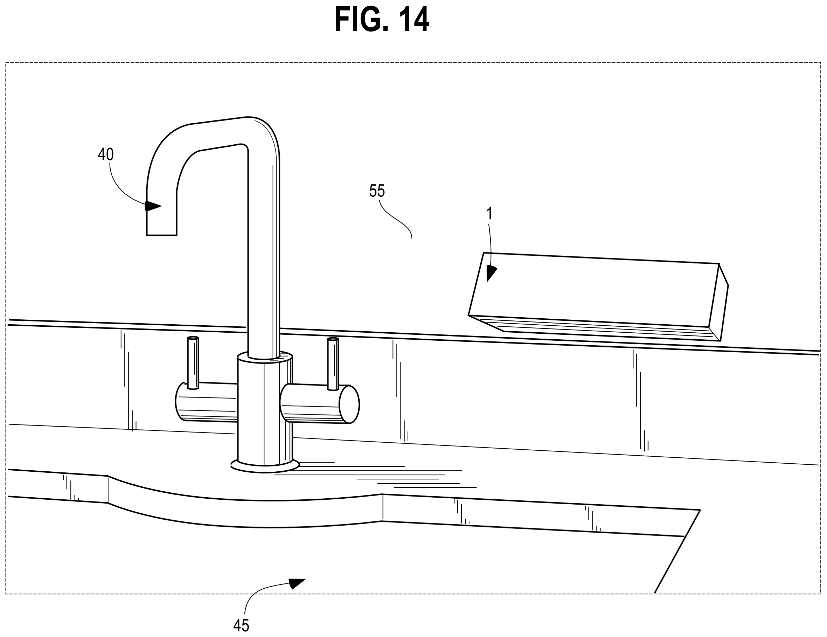

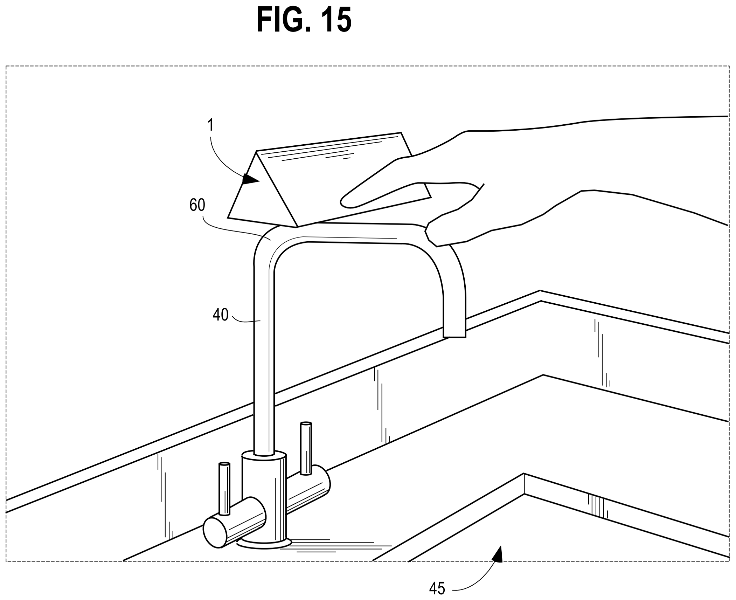

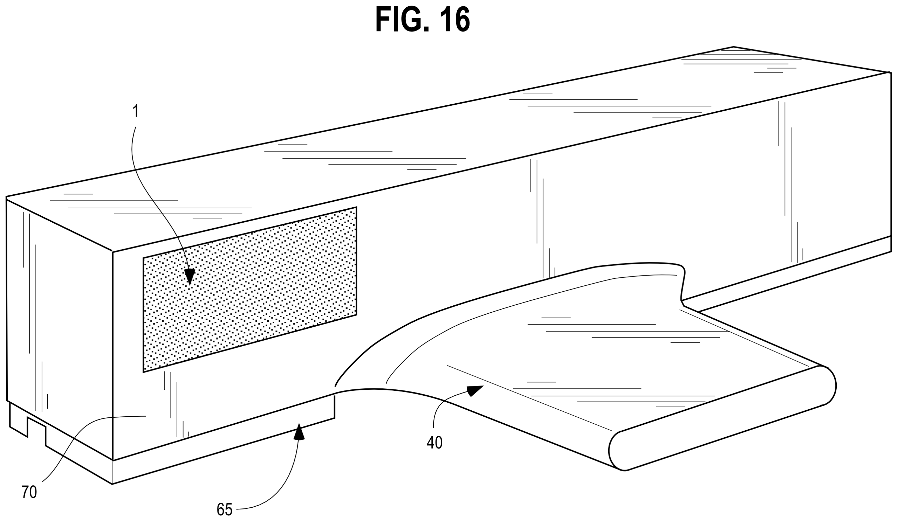

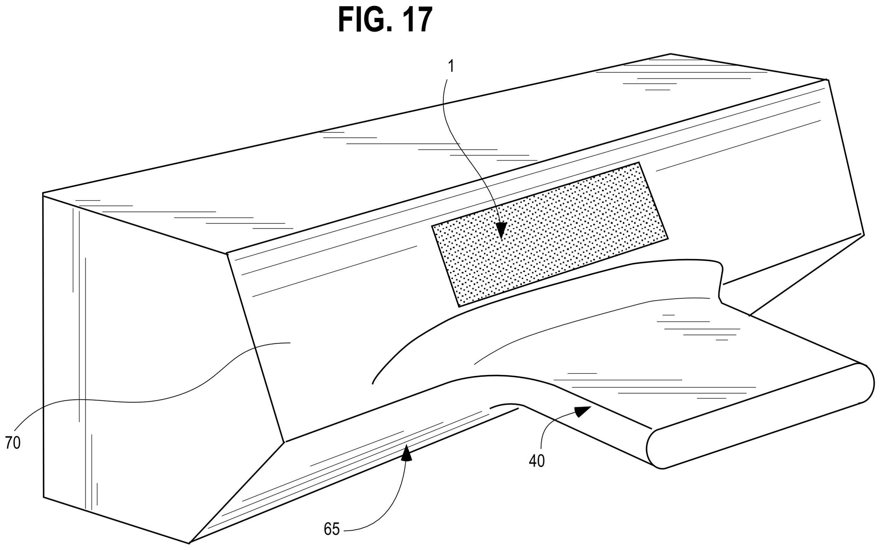

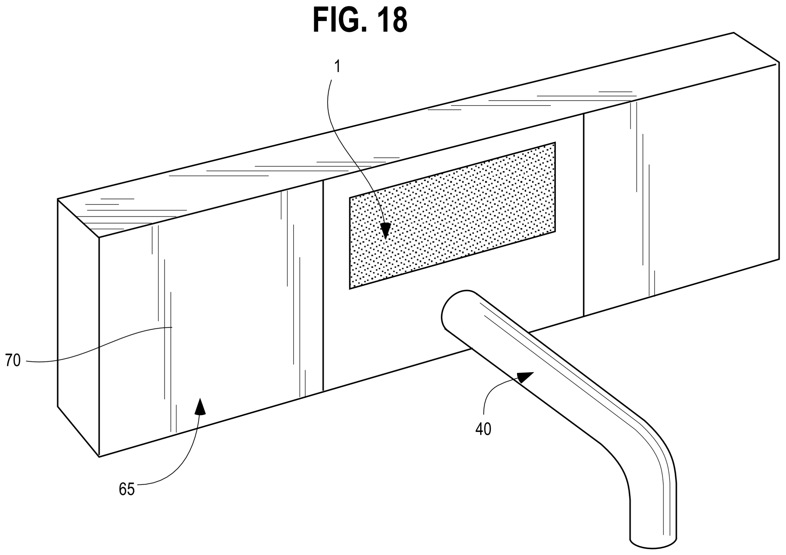

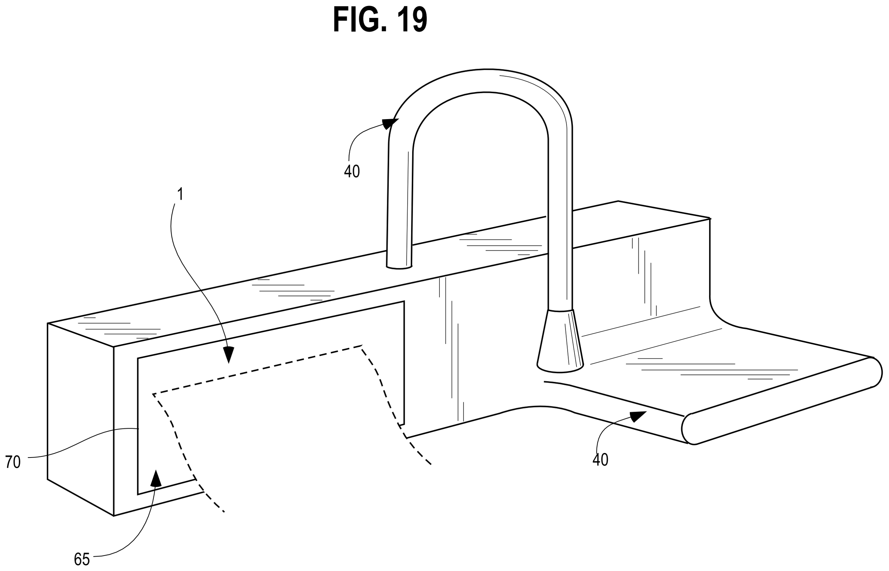

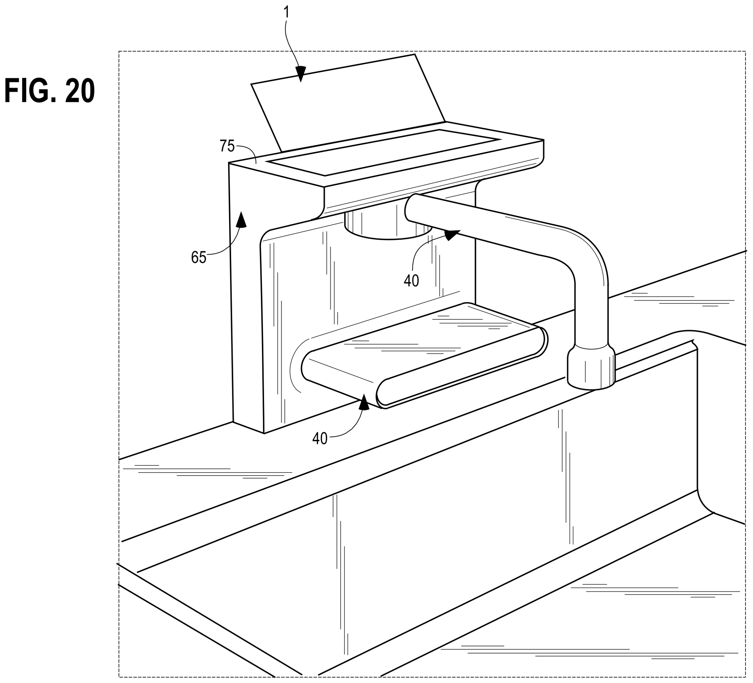

Turning to Figs. 13 and 14, the module 1 may be positioned on or near a wall 55 near a faucet 40 of a sink 45. As illustrated in Fig. 15, the module 1 may be placed on top portion 60 of the faucet 40. Turning to Figs. 16-20, the module 1 may be integrated into a faucet 40, such that the module is contained within a faucet housing 65 housing the faucet 40. As illustrated in Figs. 16-19, the module 1 may be positioned on a front side 70 of the faucet housing 65. As illustrated in Fig. 20, the module 1 may be positioned on a top side 75 of faucet housing 65 housing the faucet 40.

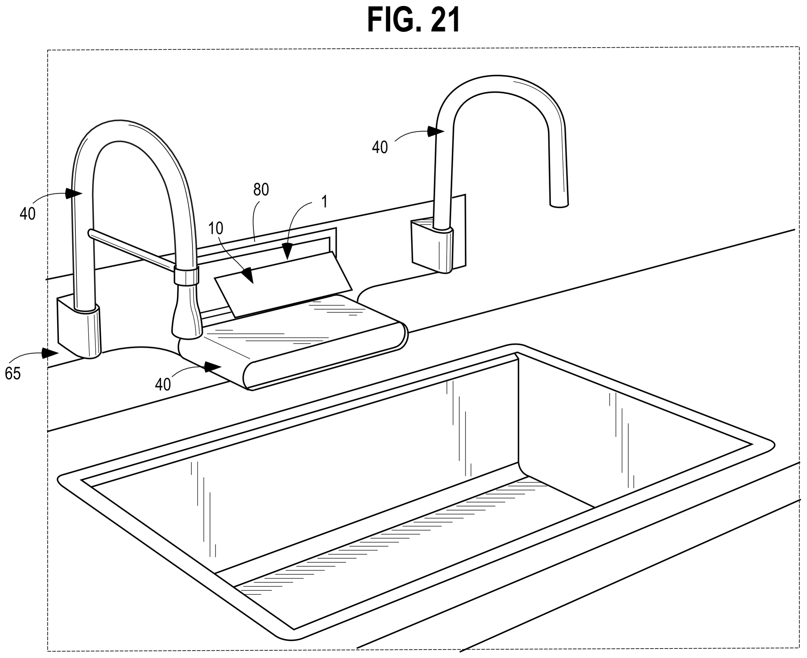

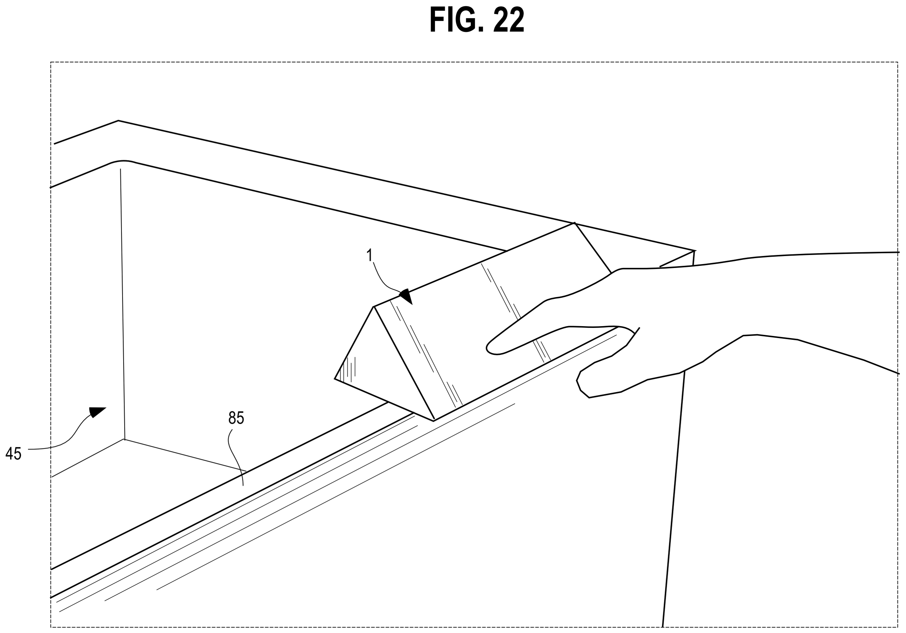

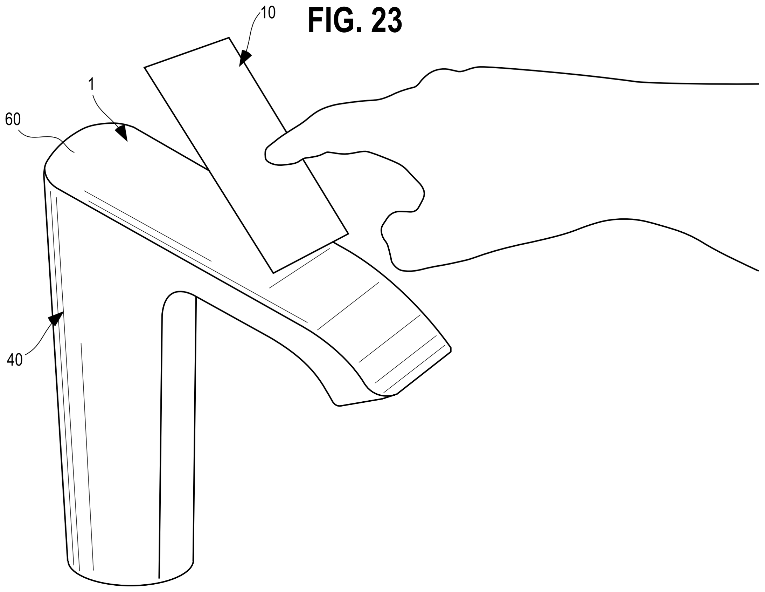

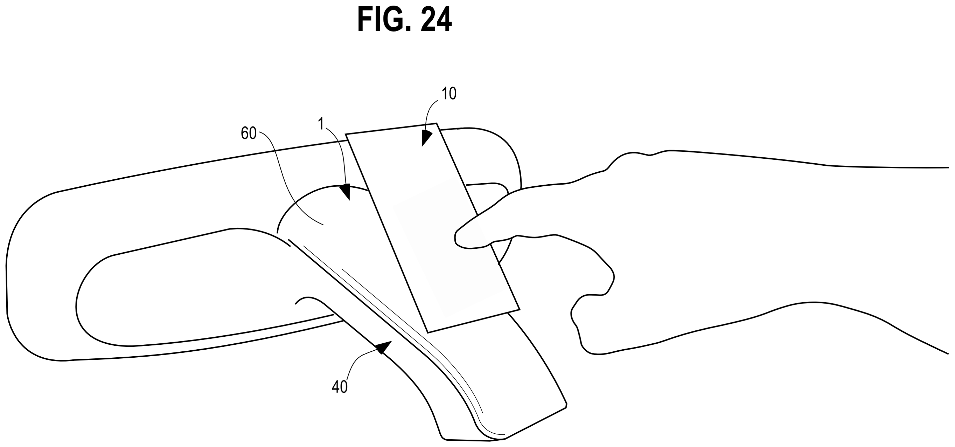

Turning to Fig. 21, the module 1 may be integrated into a center portion 80 of a faucet housing 65. The faucet plate 65 may connect to various faucets 40, and the module 1 may be positioned such that a user can easily access the screen image 10 of the module 1. As illustrated in Fig. 22, the module 1 may be placed on front portion 85 of a sink 45. Turning to Figs. 23 and 24, the module 1 may be positioned on a top portion 60 of a faucet 40, such that a user may access the screen image 10 to control operation of the faucet 40. The positioning and use of the screen image may be particularly useful when a user's hands are dirty or wet, as the user does not have to physically touch any components (thereby potentially making such components dirty or wet) while still being able to operate and use the faucet.

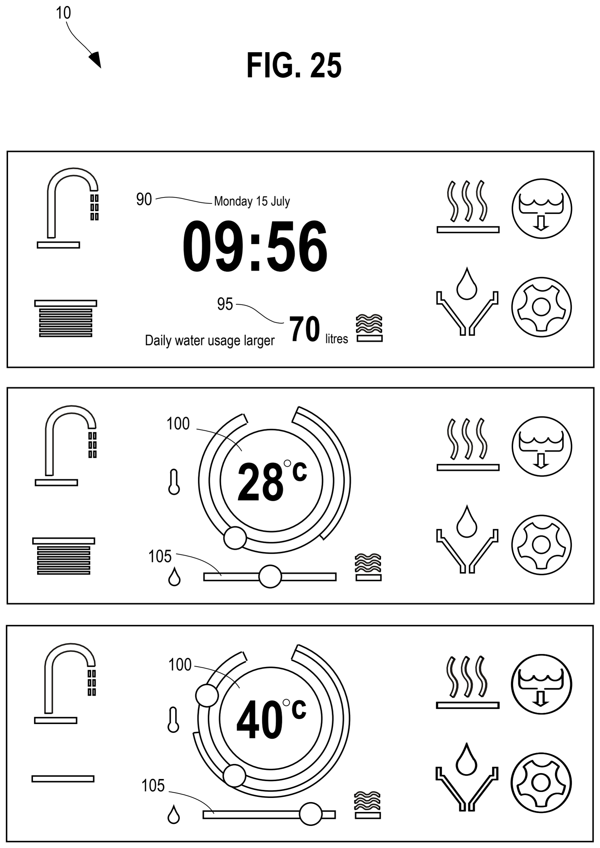

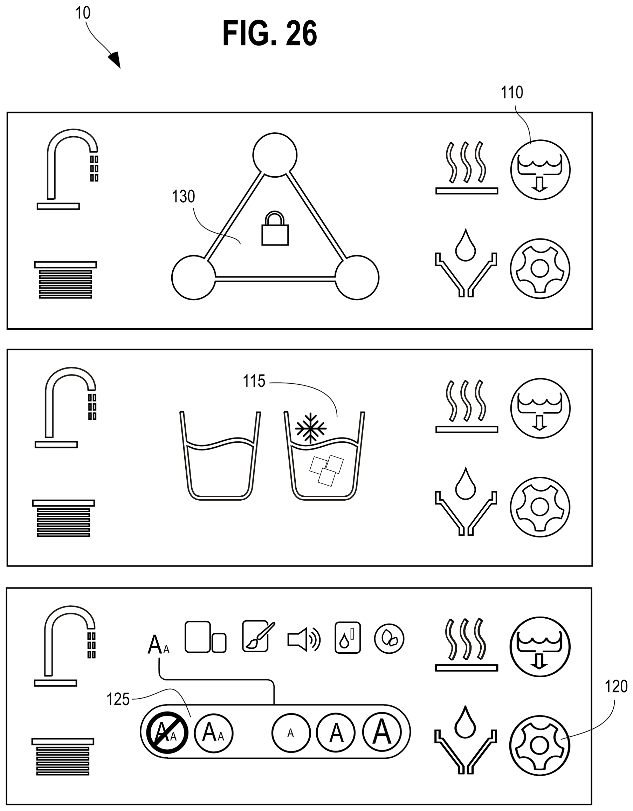

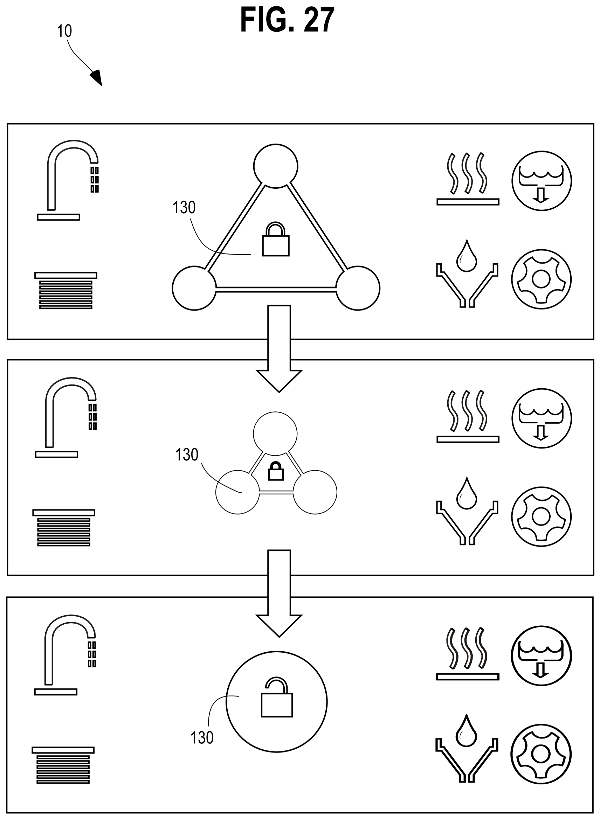

The screen image 10 may be capable of displaying various controls, functions, and characteristics of the associated product. As illustrated in Fig. 25, the screen image 10 may display a time and date 90, show the relevant water usage 95, and/or display a temperature 100 of water exiting a particular faucet and a temperature adjustment option 105. Turning to Fig. 26, the screen image 10 may include an option 110 to operate the electric drainage system. The screen image 10 may display a chilled water option 115. The screen image 10 may display a settings menu 120, where a user may, for example, adjust text options 125 and determine whether text is displayed or the size of the text and/or icons. The screen image 10 may include an option for a screen cleaning mode, which may clean the screen image 10 as desired by a user. The screen image 10 may display an unlock gesture 130 which may be used to unlock the option for boiling water to exit the faucet. As illustrated in Fig. 27, a user may use the unlock gesture 130, which may adjust as it is moved from a locked position to an unlocked position.

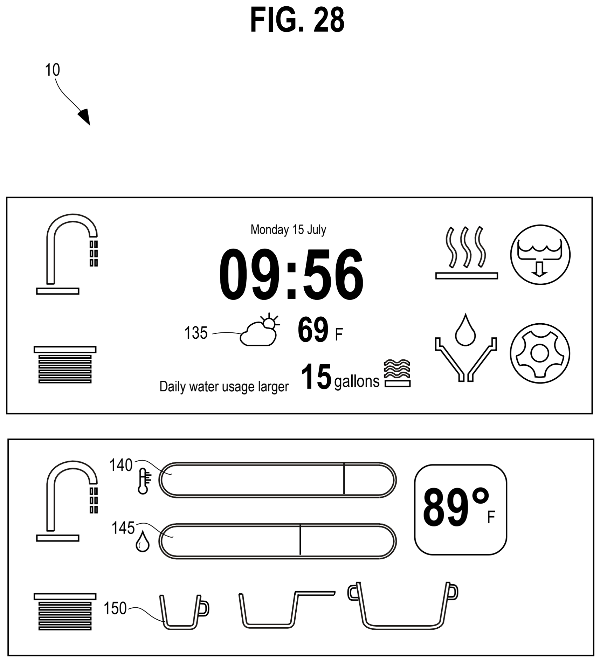

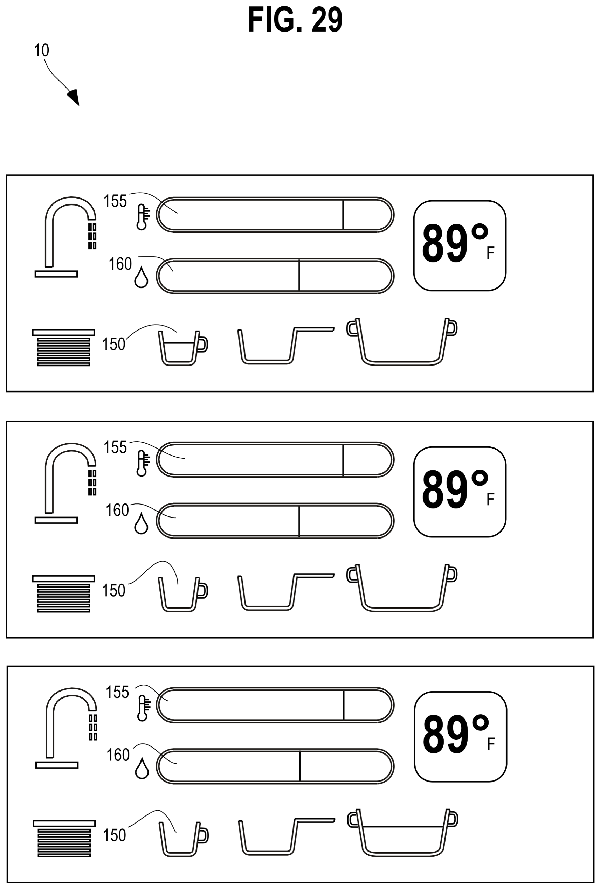

Turning to Fig. 28, the screen image 10 may display the outside weather 135, and the screen image may display the temperature 140 and flow rate 145 of water exiting the relevant faucet. The screen image 10 may include an auto-fill option 150 for auto-filling containers of certain sizes (e.g., glass, small pan, large pan). As illustrated in Fig. 29, the auto-fill option 150 may be selected for a particular size container, and the temperature 155 and flow rate 160 of water exiting the particular faucet 40 may be displayed.

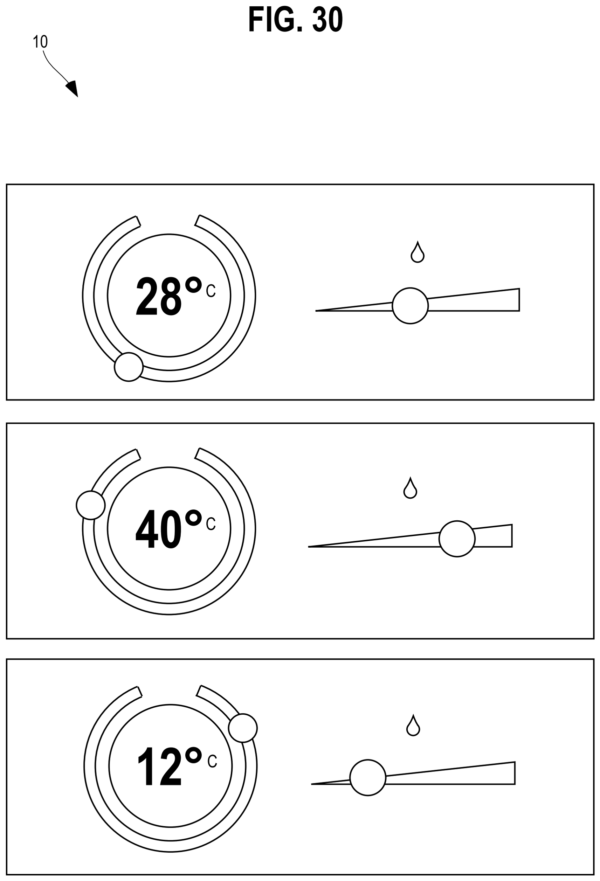

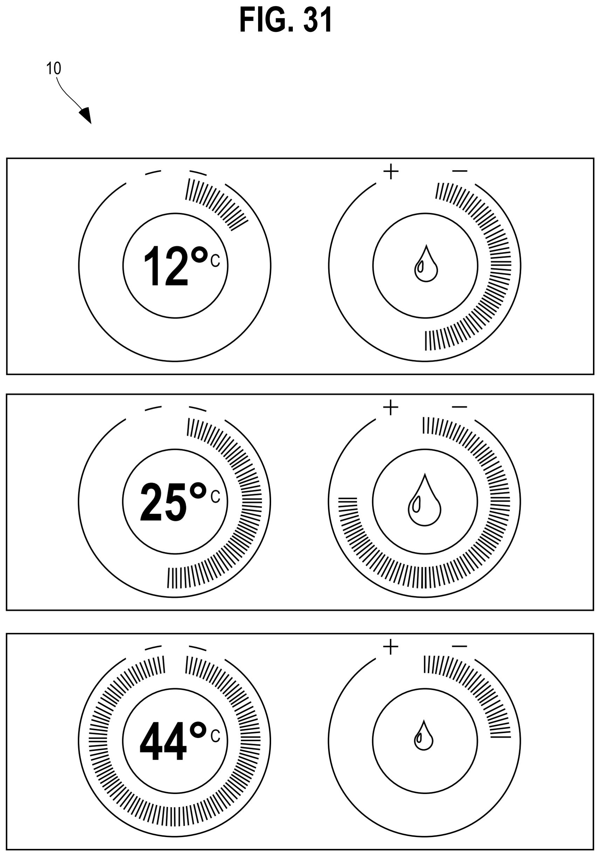

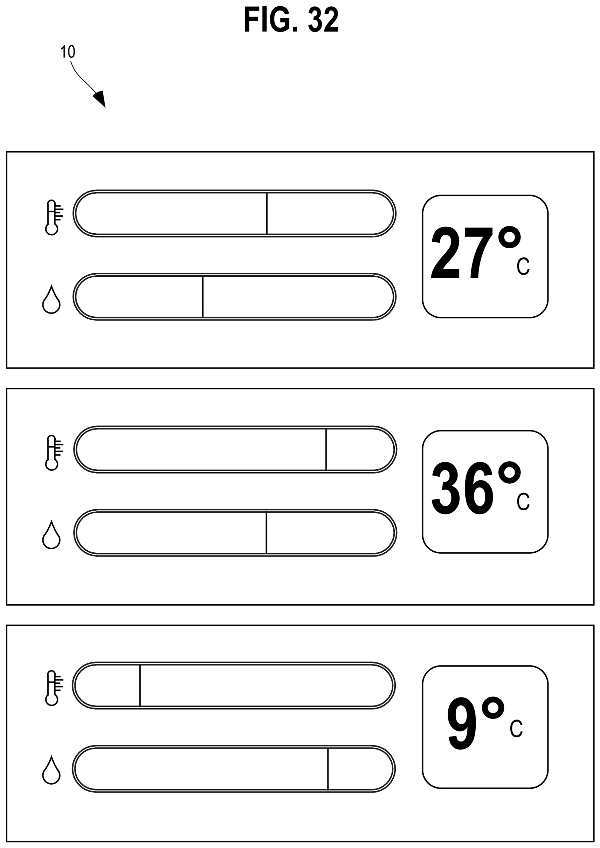

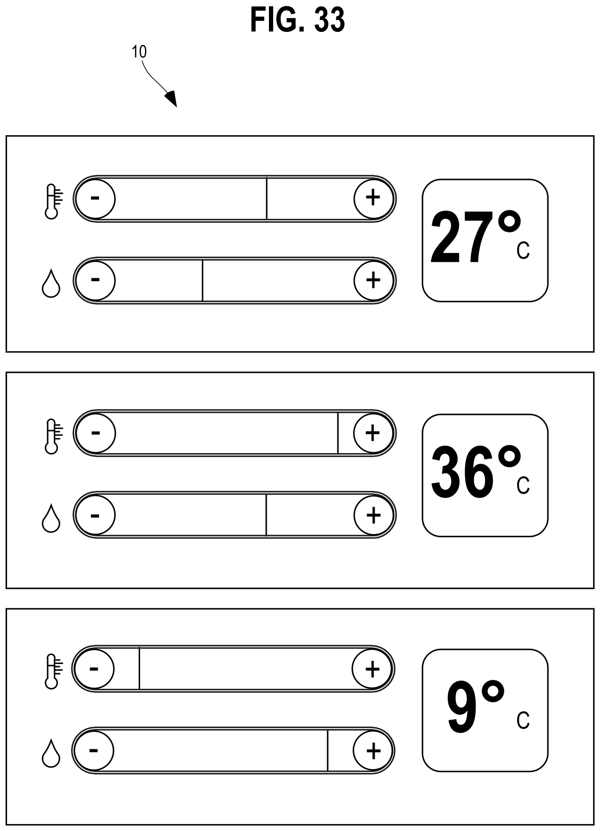

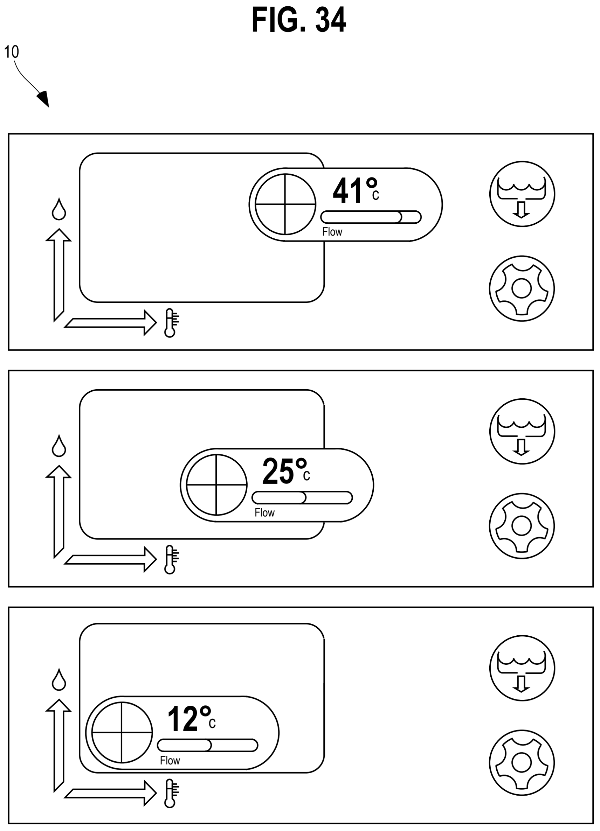

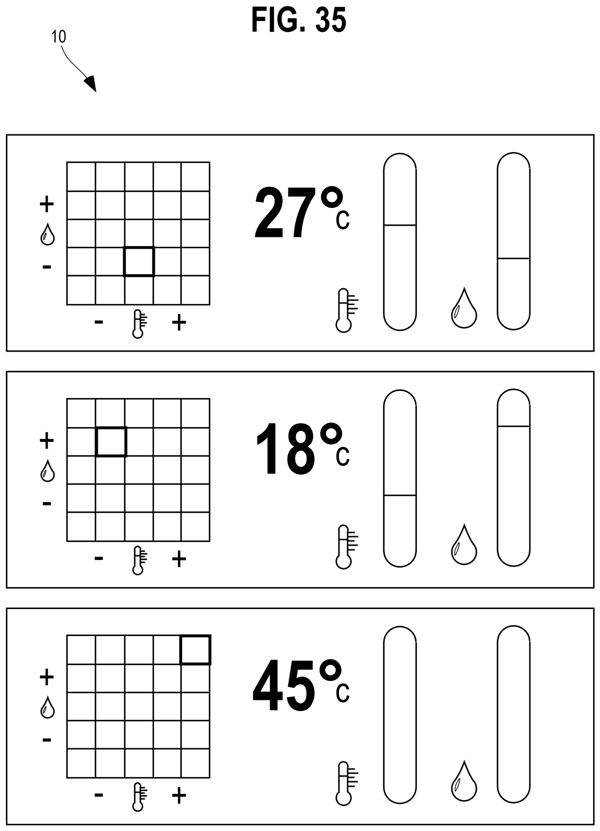

Turning now to Figs. 30-35, the screen image 10 may be used to control the temperature and/or flow rate of water exiting a particular faucet. Such controls may be configured and/or designed in any desirable manner, including in the manners as illustrated in Figs. 30-35.

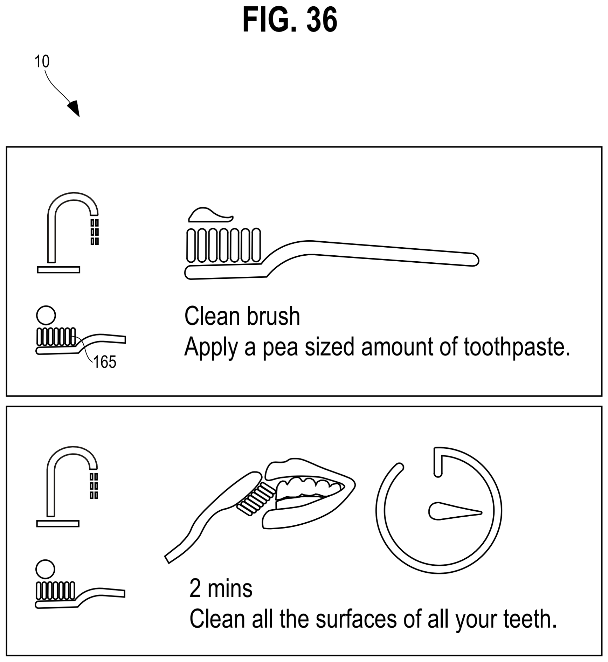

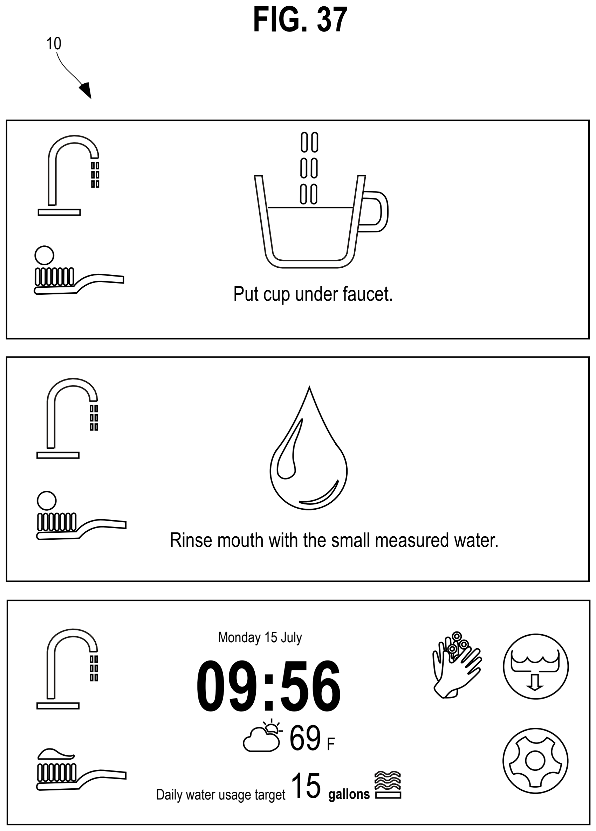

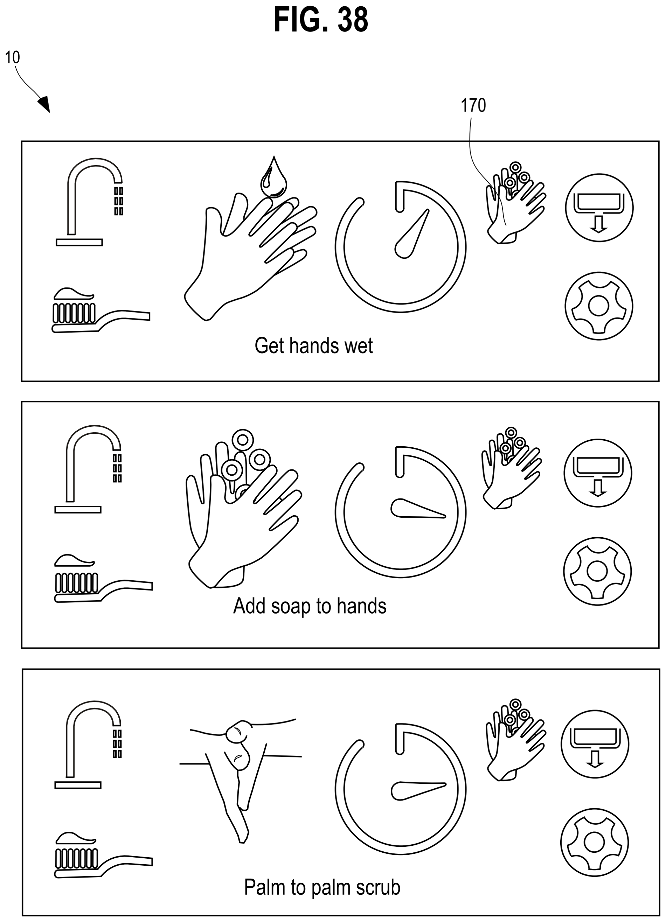

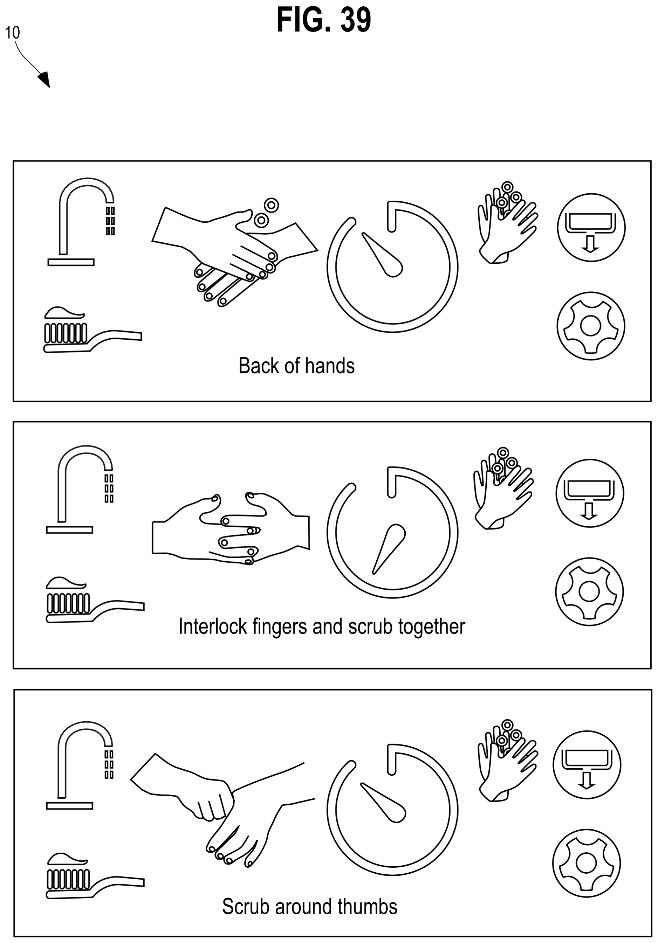

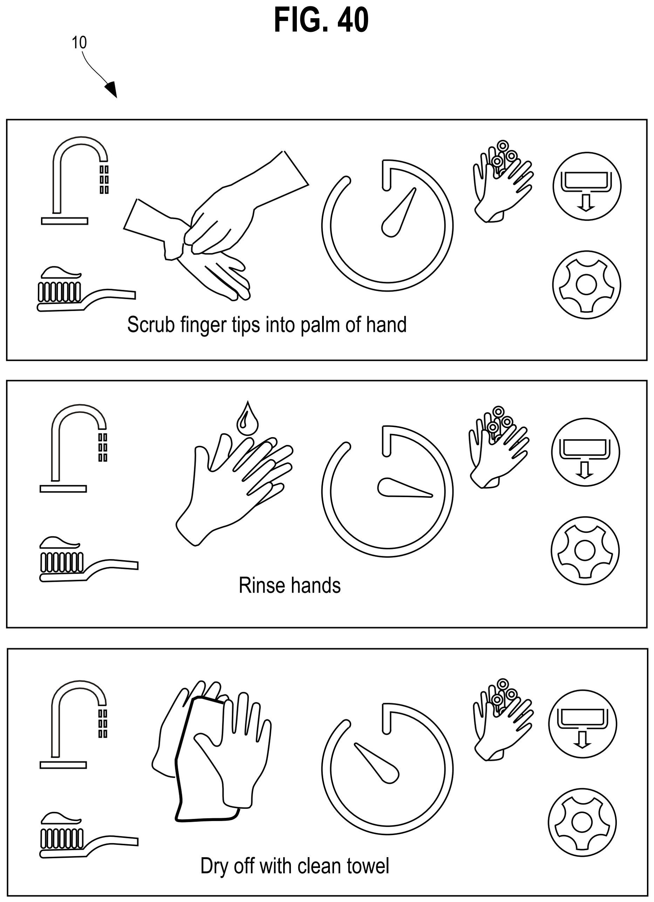

Turning to Figs. 36 and 37, the screen image 10 may include an option 165 to provide instructions and a timer for brushing teeth. When pressed, the screen image 10 may then display relevant information and instructions at appropriate times during the teeth brushing process. As illustrated in Figs. 38-40, the screen image 10 may include an option 170 to provide instructions and a timer for washing hands. When pressed, the screen image 10 may then display relevant information and instructions at appropriate times during the hand washing process.

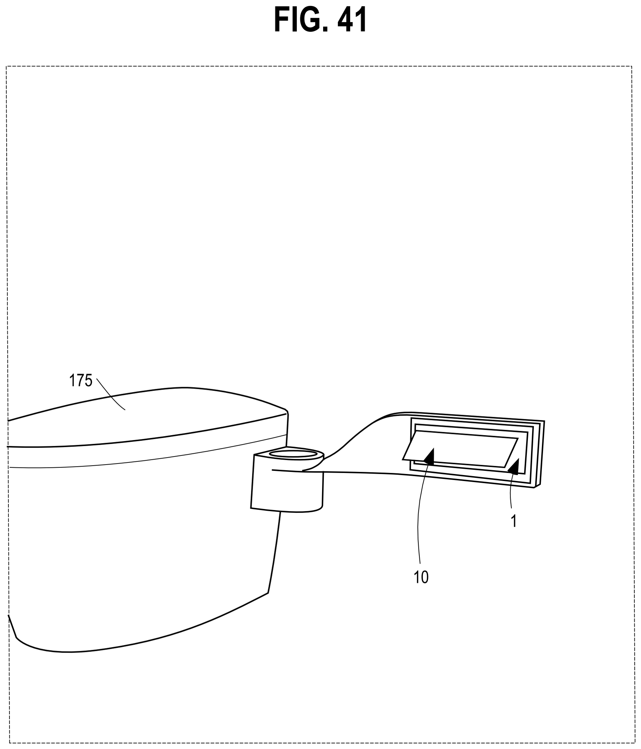

Turning now to Fig. 41, the module 1 may be attached to or integrally formed with a toilet 175. The module 1 may be capable of being adjusted and/or rotated about the toilet 175 such that it may be concealed when not in use. The module 1 may be particularly useful for users who prefer to not physically touch any components to operate the toilet. As an example, a user may be able to use the module 1 and operate the toilet (e.g., flush the toilet) using the screen image 10 without physically touching a screen or other component to cause activation or operation of certain features.

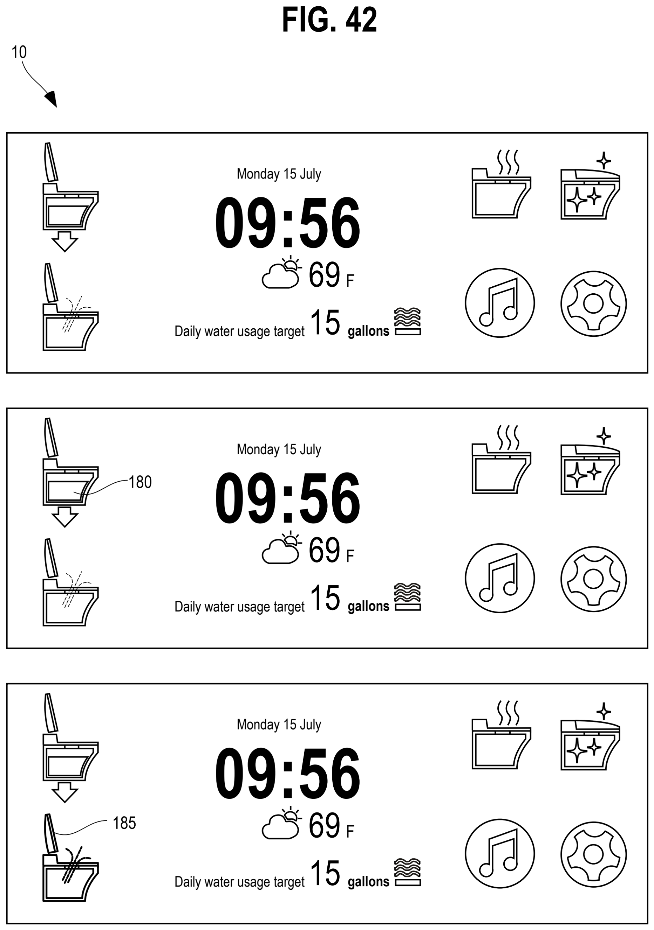

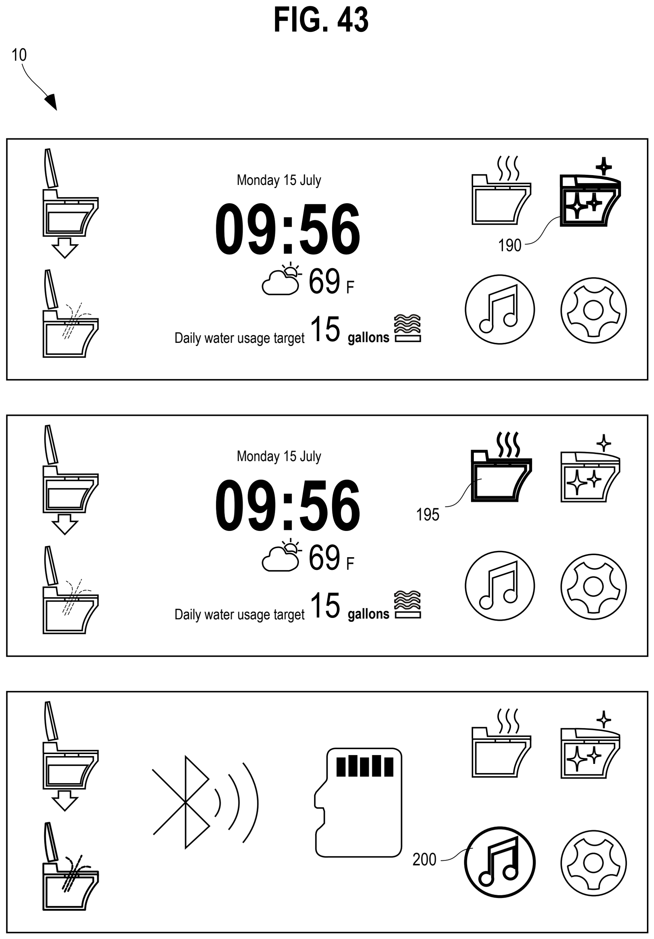

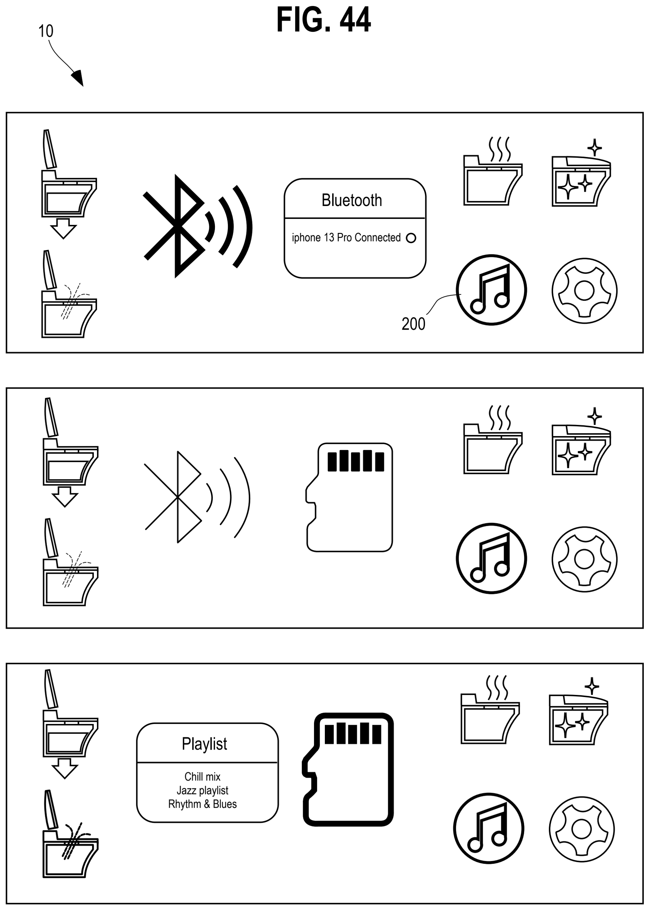

As illustrated in Figs. 42-44, the screen image 10 may display various options for using the toilet 175 and display associated characteristics. The screen image 10 may display the date, time, outdoor temperature, and/or water usage. The screen image 10 may display an auto-flush option 180 and a bidet option 185, such that when selected, the toilet 175 may flush or the bidet may operate, as applicable. The screen image 10 may display other options, including a self-cleaning option 190, a heated seat option 195, and a music option 200. The music option 200 may allow a user to select from various manners of playing music (e.g., via BlueTooth^{®} or via a playlist uploaded to a chip installed in the module) through the toilet 175.

The icons, display, and text may be oriented in any suitable or desirable manner, and a user may modify software associated with the module in order to achieve the desired orientation. The screen image 10 may be designed for accessibility purposes, such that users of various abilities may use the module 1. The screen image 10 may provide relevant information and may provide real-time feedback to a user.

Although components are discussed herein with reference to a particular component number, it should be understood that components may differ from components with the same component number (e.g., in size, shape, configuration, etc.). The faucets, sinks, toilets, and other products as described herein may be any suitable faucet, sink, toilet, or product. The faucets may include a standard faucet, a waterfall faucet, or any other suitable faucet now known or hereafter developed. he faucets, sinks, toilets, and other products as described herein may be now-existing or hereafter developed, and the module 1 as described herein may be integrated into or with any of such products. The module 1 may be positioned and/or angled in any manner, including in a manner such that the screen image 10 is angled to the user to aid in ease of access and use. The module 1 may be positioned to aid in the ergonomics of use of the module 1. The module 1 may be placed at any particular height, including, but not limited to 110mm from the top of a work surface and/or 900mm from a floor.

The present disclosure is disclosed in the context of faucets but not limited to faucets. Aspects of the present disclosure that are depicted in the illustrated embodiments or otherwise described herein may be used in conjunction with other ablutionary fittings or water distribution systems. Water distribution systems encompassed by the present disclosure include, without limitation, water distribution systems that dispense water for consumption and/or washing and water distribution systems used for private, public, domestic, residential, commercial, and/or industrial use. Water distribution systems such as, for example and without limitation, showers, baths, washtubs, hot tubs, sinks, fountains, water dispensers, and the like may incorporate aspects of the present disclosure and are encompassed herein. Example water distribution systems may include an outlet dispensing water or other fluid. The outlet may include any suitable device that is configured to dispense liquid or water. The outlet may include an ablutionary fitting, such as, for example and without limitation, a showerhead, shower spray, wand hand shower, faucet, wand, spigot, tap, spout, or the like. The outlet can include a single outlet or more than one outlet. Where the outlet includes multiple, e.g., two or more outlets, the outlets can be similar types of outlets or dissimilar types of outlets. Elements and features described with reference to one illustrated embodiment are not limited to that embodiment only; the features and elements of any one or more of the illustrated embodiments can be utilized in any other embodiment in any combination.

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations, and other uses and applications of the present constructions will, however, become apparent to those skilled in the art after considering the specification and the accompanying drawings. In addition, unless mention was made above to the contrary, it should be noted that all of the accompanying drawings are not to scale. All such changes, modifications, variations, and other uses and applications which do not depart from the spirit and scope of the present inventions are deemed to be covered by the inventions which are limited only by the claims which follow.

## Claims

1. A system comprising:
an ablutionary fitting;
a holographic user interface module to control operation of the ablutionary fitting, the holographic user interface module including:
a display screen;
a holographic 3D plate, wherein when light emits from the display screen, the light is directed toward the holographic 3D plate, and wherein the holographic 3D plate transforms the light into a screen image; and
an infrared touch bar for analyzing activation of the screen image by a user and controlling the ablutionary fitting based on the activation of the screen image.

2. The system of claim 1, further comprising a printed circuit board assembly (PCBA), wherein the display screen is coupled to the PCBA and/or2. wherein the holographic user interface module further includes a privacy filter covering the display screen.

3. The system of claim 1 or claim 2, wherein the display screen is positioned a first distance and a first angle relative to the holographic 3D plate, and wherein the screen image is positioned a second distance and a second angle relative to the holographic 3D plate.

4. The system of claim 3, wherein the first distance is the same as the second distance and/or wherein the first angle is the same as the second angle.

5. The system of any one of the preceding claims, wherein the infrared touch bar creates an interactive plane, and wherein the interactive plane substantially aligns with the screen image.

6. The system of any one of the preceding claims, wherein the ablutionary fitting is a faucet, and wherein the holographic user interface module is integrated with the faucet.

7. A holographic user interface module to control operation of an ablutionary fitting comprising:
a display screen for emitting light;
a holographic 3D plate for transforming the light from the display screen into a screen image; and
an infrared touch bar for controlling the ablutionary fitting based on activation of the screen image.

8. The holographic user interface module of claim 7, further comprising a printed circuit board assembly (PCBA), wherein the display screen is coupled to the PCBA.

9. The holographic user interface module of claim 7 or claim 8, wherein the holographic user interface module further includes a privacy filter covering the display screen and/or wherein the light emitted from the display screen is directed toward the holographic 3D plate.

10. The holographic user interface module of claim 7, claim 8 or claim 9, wherein the display screen is positioned a first distance and a first angle relative to the holographic 3D plate, and wherein the screen image is positioned a second distance and a second angle relative to the holographic 3D plate.

11. The holographic user interface module of claim 10, wherein the first distance is the same as the second distance and/or wherein the first angle is the same as the second angle.

12. The holographic user interface module of any one of claims 7 to 11, wherein the infrared touch bar creates an interactive plane, and wherein the interactive plane substantially aligns with the screen image.

13. A system comprising:
an ablutionary fitting;
a holographic user interface module to control operation of the ablutionary fitting, the holographic user interface module including:
a display screen for emitting light;
a holographic 3D plate for transforming the light from the display screen into a screen image; and
an infrared touch bar for controlling the ablutionary fitting based on activation of the screen image;
wherein the screen image displays a plurality of control options; and
wherein, when the screen image is activated and at least one of the plurality of control options is selected, at least one characteristic of water exiting the ablutionary fitting is adjusted.

14. The system of claim 13, further comprising a printed circuit board assembly (PCBA), wherein the display screen is coupled to the PCBA.

15. The system of claim 13 or claim 14, wherein: the ablutionary fitting is a faucet, wherein the holographic user interface module is integrated with the faucet; and/or the ablutionary fitting is a toilet, wherein the holographic user interface module is integrated with the toilet.
